# EUROPÄISCHE PATENTANMELDUNG

(11) **EP 4 513 077 A1**
(43) Veröffentlichungstag der Anmeldung: **26.02.2025**
(21) Anmeldenummer: 24195423.9
(22) Anmeldetag: 20.08.2024
(51) Int. Cl.: F16P 3/14, G01V 8/20

(54) **VERFAHREN UND SENSORANORDNUNG ZUR ÜBERWACHUNG EINES SCHUTZFELDS**

(30) Priorität: 21.08.2023 CH 882202023
(71) Anmelder: ELESTA GmbH, 7310 Bad Ragaz (CH)
(72) Erfinder: Guldimann, Dominik, 7402 Bonaduz (CH)
(74) Vertreter: Swisspat Riederer Hasler Patentanwälte AG

(57) **Zusammenfassung**

Dargestellt und beschrieben ist ein Verfahren und eine Sensoranordnung zur Überwachung eines Schutzfelds an einer Anlage. Das Schutzfeld ist durch ein Lichtgitter (11) mit einer Mehrzahl von Lichtstrahlen (17) gebildet. Beim Eintritt eines Objekts (13) in das Schutzfeld wird das Schutzfeld in einen ersten Bereich (18), einen zweiten Bereich (19 und einen Toleranz-Bereich (21) unterteilt, wobei der zweite Bereich (19)durch alle bis auf die äussersten vom Objekt (13) unterbrochenen Lichtstrahlen (17) definiert ist und ein erster Bereich (18) jederzeit vorhanden ist. Nach Freigabe eines unterbrochenen Lichtstrahls im zweiten Bereich (19) wird ein Abschaltsignal erzeugt, falls nach einer vordefinierten ersten Zeitdauer nicht alle Lichtstrahlen (17) im Schutzfeld frei sind.

## Beschreibung

### TECHNISCHES GEBIET DER ERFINDUNG

Die Erfindung betrifft ein Verfahren und eine Sensoranordnung zur Überwachung eines Schutzfelds gemäss Oberbegriff der Ansprüche 1 und 10.

### HINTERGRUND DER ERFINDUNG

Eine Aufgabe eines Lichtgitters ist das Absichern eines Gefahrenbereichs in einer Anlage durch Erzeugen eines Schutzfelds. Wenn das durch das Lichtgitter entstandene Schutzfeld unterbrochen wird, erzeugt das Lichtgitter ein Abschaltsignal und führt zum schnellstmöglichen Stopp der Anlage. Das Schutzfeld kann jedoch vorgesehen sein, bestimmte Objekte passieren zu lassen, damit zum Beispiel bei materialverarbeitenden Maschinen weiterhin erforderliche Materialen durch das Schutzfeld in den Gefahrenbereich zugeführt oder Material durch das Schutzfeld entnommen werden kann, ohne dass ein Abschaltsignal vom Lichtgitter erzeugt wird.

Im Patent JP 3 603 084 B2 wird ein Lichtgitter und eine Lichtgitteranordnung vorgestellt, deren Schutzfelder senkrecht zur Transportrichtung angeordnet sind. Das erste Lichtgitter wird links und rechts der Transportstrasse und das zweite Lichtgitter oben und unten angeordnet. Somit kann vorteilshalber neben der Höhe auch die Breite eines Objekts erfasst werden. Die Unterscheidung zwischen Person und Material, respektive die Unterscheidung zwischen zulässigen und unzulässigen Objekten wird mittels einem im Voraus im Schutzfeld eingelernten Referenzobjekt gelöst. Das Lichtgitter vergleicht im Betrieb das Objekt mit der gespeicherten Referenz und entscheidet, ob das Objekt zulässig ist.

Im Patent EP 2 933 662 A1 braucht das Lichtgitter zusätzliche externe Sensoren, um festzustellen, ob das ankommende Objekt zulässig ist.

Im Patent EP 2 017 524 B1 wird eine zur Vertikale in Transportrichtung geneigtes Lichtgitter beschrieben, das ohne zusätzliche Mutingsensoren auskommt. Somit erzeugt ein rechteckiges Objekt beim Bewegen durch das Schutzfeld ein Muster, das in drei Phasen unterteilt wird. Jede Phase hat eine spezifische Eigenschaft. In der ersten Phase nimmt die Anzahl unterbrochener Lichtstrahlen stetig zu. In der zweiten Phase bleibt die Anzahl abgedeckter Lichtstrahlen gleich. Und in der dritten Phase nimmt die Anzahl unterbrochener Lichtstrahlen stetig ab. Die Unterscheidung zwischen zulässigen und unzulässigen Objekten wird mittels Hinterlegung des Ablaufs der Anzahl an unterbrochenen Lichtstrahlen bei zulässigem Objekt erzielt. Ein Einlernen mittels eines Referenzobjekts ist nicht nötig, was allgemein als vorteilhaft angesehen wird.

Die europäische Patentanmeldung EP 3 447 540 offenbart einen Lichtvorhang zur Erfassung von Objekten und/oder Personen innerhalb eines Schutzfeldes mit Hilfe eines Lichtvorhangs, bei dem mindestens eine Überwachungszone einen ersten Teilbereich des Überwachungsbereiches des Lichtvorhangs bildet und durch die Steuer- und Auswerteeinheit bei einer Strahlunterbrechung in der Überwachungszone ein Sicherheitsabschaltsignal generiert wird. Ausserdem bildet eine Warnungszone einen zweiten Teilbereich des Überwachungsbereiches des Lichtvorhangs wobei bei einer Strahlunterbrechung in der Warnungszone durch die Steuer- und Auswerteeinheit ein Warnsignal generiert wird. Überschreitet die Strahlunterbrechung in der Warnungszone eine vorgegebene Zeitdauer wird durch die Steuer- und Auswerteeinheit ein Sicherheitsabschaltsignal generiert. Im Weiteren bildet eine Ausblendungszone einen weiteren Teilbereich des Überwachungsbereiches, wobei durch die Steuer- und Auswerteeinheit bei einer Strahlunterbrechung in der Ausblendungszone kein Sicherheitsabschaltsignal generiert wird. Eine Ausblendungszone dient dazu, dauerhaft unterbrochene Teilbereiche des Lichtvorhangs, beispielsweise durch notwendige Werkzeugtische oder Werkzeuge, die temporär in den Überwachungsbereich gelangen, von der Überwachung auszusparen.

Das Patent EP 3 133 423 beschreibt ein Lichtvorhang-Steuersystem mit einer Lichtvorhang-Statuskomponente, die dazu konfiguriert ist, Statusinformationen für einen Lichtvorhang zu generieren, basierend auf einer Bestimmung, ob ein oder mehrere Lichtstrahlen aus einer Menge von Lichtstrahlen unterbrochen sind, und einer Muting-Steuerkomponente, die dazu konfiguriert ist, einen teilweisen Stummschaltungsmodus für den Lichtvorhang zu steuern. Eine Stummschaltungshöhen-Konfigurationskomponente dient dazu eine Stummschaltungshöhe für den teilweisen Stummschaltungsmodus festzulegen, basierend auf der Identifikation eines höchsten Lichtstrahls aus der Menge von Lichtstrahlen, der von einem Objekt unterbrochen wird, das vom Lichtvorhang während des teilweisen Stummschaltungsmodus erkannt wird.

Die Stummschaltungs-Steuerkomponente ist ferner dazu konfiguriert ist, für den teilweisen Stummschaltungsmodus eine Untermenge der Lichtstrahlen stummzuschalten, die von einem untersten Lichtstrahl des Lichtvorhangs bis zu einem Lichtstrahl reicht, der der Stummschaltungshöhe entspricht.

Im Patent EP 3133423 A1 können nur Objekte zugelassen werden, die zu den Anfangsstrahlen des Lichtgitters hin angeordnet sind. Ein Objekt, das zu den letzten Strahlen des Lichtgitters hin zugewandt ist, sowie die Erfassung von Objekten, die weder die Anfangsstrahlen noch die letzten Strahlen abdecken, ist nicht vorgesehen.

### AUFGABE

Es ist deshalb eine Aufgabe der vorliegenden Erfindung, die Nachteile des zitierten Stands der Technik zu vermeiden und ein Verfahren zur Überwachung eines Schutzfelds aufzuzeigen, welches mit einem Lichtgitter betrieben werden kann und nicht auf ein Referenzobjekt zum Definieren eines zulässigen Bereichs angewiesen ist. Ausserdem ist es Ziel der vorliegenden Erfindung, eine Sensoranordnung vorzuschlagen, die mit dem Verfahren betreibbar ist.

### BESCHREIBUNG

Die Aufgabe wird gelöst mit einem Verfahren zur Überwachung eines Schutzfelds mit den Merkmalen des Patentanspruchs 1.

Die Erfindung betrifft ein Verfahren zur Überwachung eines Schutzfelds an einer Anlage. Das Schutzfeld ist durch ein Lichtgitter gebildet. Das Lichtgitter kommt durch eine Mehrzahl von Lichtstrahlen zustande, die in einer Ebene liegen und von einer Sendevorrichtung an die gegenüberliegend angeordnete Empfangsvorrichtung gesendet werden. Das Lichtgitter weist eine Steuereinheit zur Aufnahme und Bearbeitung von Signalen der Sende- und/oder Empfangsvorrichtung auf. Beim Eintritt eines Objekts in das Schutzfeld ist das Schutzfeld in einen ersten, einen zweiten und einen Toleranz-Bereich unterteilt, wobei der zweite Bereich durch alle bis auf die äussersten vom Objekt unterbrochenen Lichtstrahlen definiert ist. Ein erster Bereich ist jederzeit vorhanden. Die äussersten vom Objekt unterbrochenen Lichtstrahlen bilden zusammen mit den benachbarten freien Lichtstrahlen den Toleranzbereich, falls freie benachbarte Lichtstrahlen vorliegen. Die restlichen freien Lichtstrahlen bilden den ersten Bereich. Bei Unterbruch eines Lichtstrahls im ersten Bereich wird ein Abschaltsignal vom Lichtgitter erzeugt. Die freien und unterbrochenen Lichtstrahlen im Toleranzbereich werden ignoriert und es wird kein Abschaltsignal aufgrund dieser Lichtstrahlen erzeugt. Das Lichtgitter prüft im zweiten Bereich die Anzahl an unterbrochenen Lichtstrahlen, solange das Objekt sich im Schutzfeld befindet. Nach Freigabe eines unterbrochenen Lichtstrahls im zweiten Bereich wird ein Abschaltsignal erzeugt, falls nach einer vordefinierten ersten Zeitdauer nicht alle Lichtstrahlen im Schutzfeld frei sind.

Das Schutzfeld ist vorgesehen, ein Abschaltsignal für den Stopp der Anlage zu erzeugen, wenn ein Objekt unzulässigerweise das Schutzfeld passiert oder in dieses eintritt. Die in das Schutzfeld eintretenden Objekte werden aufgeteilt in zulässige und in unzulässige Objekte. Die Anforderung an das Lichtgitter ist, dass ein zulässiges Objekt das Schutzfeld ohne Weiteres passieren kann, während ein unzulässiges Objekt zur Erzeugung eines Abschaltsignals und somit zum Stopp der Anlage führt.

Beim erfindungsgemässen Verfahren zur Überwachung eines Schutzfeldes braucht das Lichtgitter keine Information über die Dimension der zulässigen Objekte zu besitzen. Diese Information ist bei den Lichtgittern aus dem Stand der Technik durch Bereitstellen der Abmessungen des zulässigen Objektes oder durch vorgängiges Scannen eines Referenzobjekt dem Lichtgitter zur Verfügung gestellt. Das erfindungsgemässe Verfahren ermöglicht während dem Passieren eines Objekts durch das Schutzfeld festzustellen, ob das Objekt zulässig oder nicht zulässig ist. Hierfür wird der Zeitpunkt bestimmt, zu welchem das Objekt in das Schutzfeld eintritt und mindestens einen Lichtstrahl unterbricht. Nach einer vordefinierten Zeitdauer prüft das Lichtgitter, wie viele Lichtstrahlen durch das Objekt unterbrochen sind und unterteilt das Schutzfeld aufgrund dessen in drei Bereiche. Die Lichtstrahlen, welche vom Objekt nach der vordefinierten Zeit unterbrochen sind, bilden bis auf die zwei äussersten Lichtstrahlen den sogenannten zweiten Bereich des Schutzfelds. Die äusserten unterbrochenen Lichtstrahlen bilden mit den benachbarten freien Lichtstrahlen den Toleranzbereich. Die restlichen Lichtstrahlen des Schutzfeldes bilden den ersten Bereich. Falls einer der Lichtstrahlen im ersten Bereich unterbrochen wird, erzeugt das Lichtgitter ein Abschaltsignal, mit welchem der sofortige Stopp der Anlage eingeleitet wird. Der Unterbruch oder die Freigabe der Lichtstrahlen im Toleranzbereich haben keine Auswirkung auf die Erzeugung eines Abschaltsignals. Eine Bedingung, welche sich aufgrund der Definition der Unterteilung des Schutzfelds ergibt, ist, dass die das Schutzfeld passierenden Objekte möglichst senkrecht durch das Schutzfeld geführt werden. Die Objekte sollten möglichst Kanten aufweisen, welche senkrecht zum Schutzfeld ausgerichtet werden können. Damit kann gewährleistet werden, dass über eine längere Zeit, während der das Objekt im Schutzfeld ist, durchgehend die gleichen Lichtstrahlen unterbrochen bleiben.

Beim Austritt des Objekts aus dem Schutzfeld werden die unterbrochenen Lichtstrahlen im zweiten Bereich freigegeben. Um bei der Freigabe der unterbrochenen Lichtstrahlen im zweiten Bereich kein Abschaltsignal zu erzeugen, wartet das Lichtgitter nach Freigabe eines ersten Lichtstrahls im zweiten Bereich eine vordefinierte Zeitspanne ab. Am Ende dieser Zeitspanne darf kein Lichtstrahl unterbrochen sein, ansonsten wird ein Abschaltsignal erzeugt. Somit müssen die unterbrochenen Lichtstrahlen nach Freigabe eines ersten Lichtstrahls innerhalb einer vordefinierten Zeitspanne alle freigegeben sein.

Das erfindungsgemässe Verfahren ermöglicht eine lokale und temporäre Überbrückung des Schutzfelds, wobei der Bereich der Überbrückung auf die Dimension des durch das Schutzfeld passierenden Objektes eingeschränkt ist. Die Überbrückung des Schutzfelds kann zeitlich zu einem beliebigen Zeitpunkt stattfinden. Zugleich bietet der Einsatz einer vordefinierten Zeitdauer bis zur definitiven Unterteilung des Schutzfelds eine zuverlässige Funktionsweise und trägt dazu bei, die Komplexität der Sensorik und deren Programmierung zu verringern. Die durch das Lichtgitter aufgespannte Schutzfeld-Ebene kann senkrecht zur Förderbewegung der Objekte angeordnet sein, was den Aufwand zur Installation eines Lichtgitters mit einem erfindungsmässigen Verfahren reduziert.

Beim Eintritt eines Objektes in das Schutzfeld ist es möglich, dass beim Unterbruch des ersten Lichtstrahls die vollständige Ausbreitung des Objekts in Querrichtung noch nicht erfasst ist. Vorteilhafterweise wird das Schutzfeld beim Eintritt eines Objekts in das Schutzfeld nach Unterbruch eines Lichtstrahls und Ablauf einer vordefinierten zweiten Zeitdauer in den ersten, den zweiten und den Toleranz-Bereich unterteilt. Die dafür vordefinierte Zeitdauer ist unter anderem von der Geschwindigkeit des Objektes abhängig. Je langsamer sich das Objekt durch das Schutzfeld bewegt, umso länger muss diese Zeitdauer zur Unterteilung des Schutzfelds gewählt werden. Die Verwendung einer Zeitdauer vom Unterbruch des ersten Lichtstrahls bis zur Unterteilung des Schutzfelds bietet einheitliche Bedingungen für alle Objekte, wodurch die Komplexität zur Erkennung eines zulässigen Objekts reduziert wird.

Das Objekt, welches das Schutzfeld passiert, muss bevorzugt eine Mindestgrösse aufweisen, damit es als zulässig erkannt wird. Damit wird das Passieren von unzulässigen kleinen Objekten verhindert. Diese Einschränkung hilft die Betriebssicherheit zu erhöhen. Die Mindestgrösse des Objekts ist definiert durch die Distanz von mindestens fünf benachbarten Lichtstrahlen. Wenn nach Unterbruch eines ersten Lichtstrahls und Ablauf einer vordefinierten Zeitdauer die Anzahl unterbrochener Lichtstrahlen nicht mindestens fünf ist, wird ein Abschaltsignal erzeugt. Drei der fünf unterbrochenen Lichtstrahlen bilden dabei den zweiten Bereich während die äussersten zwei Lichtstrahlen im Toleranzbereich zu liegen kommen. Vorzugsweise ist die Mindestgrösse des zweiten Bereichs durch mindestens drei unterbrochenen Lichtstrahlen definiert.

Die Unterteilung des Schutzfelds in drei Teilbereiche erfolgt nach Eintritt eines Objekts in das Schutzfeld. Dabei definieren die äussersten unterbrochenen Lichtstrahlen zusammen mit den benachbarten freien Lichtstrahlen den Toleranzbereich im Schutzfeld. Die Anzahl an benachbarten freien Lichtstrahlen kann hierfür mehr als 1 sein. Vorstellbar ist, dass die bis zu drei benachbarten freien Lichtstrahlen zusammen mit den jeweils äussersten unterbrochenen Lichtstrahlen einen Toleranzbereich bilden. Vorteilhafterweise ist der Toleranzbereich durch eine gleiche Anzahl von freien wie unterbrochenen Lichtstrahlen gebildet.

Vorzugsweise weist die erste Zeitdauer eine Länge von maximal 4 Sekunden, insbesondere von maximal 2 Sekunden, auf. Dies definiert eine Zeitdauer, nach welcher das Objekt den Austritt aus dem Schutzfeld abgeschlossen haben muss. Durch Bestimmen eines Höchstwerts für diesen Parameter ist eine bessere und schnellere Detektion von unzulässigen Objekten ermöglicht. Die Freigabe des ersten Lichtstrahls im zweiten Bereich bedeutet, dass das Objekt angefangen hat, das Schutzfeld zu verlassen. Dieser Prozess sollte innerhalb der vordefinierten Zeitdauer von maximal 4 Sekunden abgeschlossen sein. Damit wird eine bessere Erkennung von zulässigen Objekten erreicht.- Zugleich bildet es einen Toleranzbereich, falls ein zulässiges Objekt eine nichtgeradlinige und senkrecht zur Förderrichtung angeordnete Hinterkante aufweist.

Die erste Zeitdauer weist vorteilhafterweise eine Länge von mindestens 5 ms, insbesondere von mindestens 25 ms, auf. Die Mindestdauer der ersten Zeitdauer bietet einen grösseren Freiraum bei der Ausgestaltung der Geometrie der Objekte. Je kleiner die erste Zeitdauer definiert ist, umso weniger Zeit hat ein Objekt, um aus dem Schutzfeld auszutreten.

In einer bevorzugten Ausführungsform weist die zweite Zeitdauer eine Länge von maximal 4 Sekunden, insbesondere von maximal 2 Sekunden, auf. Somit ist eine maximale Zeitdauer gegeben, bis zu welcher ein Objekt soweit in das Schutzfeld eingedrungen sein muss, dass dessen Ausdehnung senkrecht zur Förderrichtung vollständig umfasst ist. Das Einführen einer maximalen Zeitdauer ermöglicht das schnellere Detektieren eines nicht zulässigen Objektes, da für das Detektieren die Zeitdauer abgewartet werden muss.

In einer weiter bevorzugten Ausführungsform weist die zweite Zeitdauer eine Länge von mindestens 5 ms, insbesondere von mindestens 25 ms, auf. Die Mindestlänge der Zeitdauer zur Unterteilung des Schutzfelds erhöht den zuverlässigen Betrieb des erfindungsgemässen Verfahrens, da damit der Zeit für das Eintreten eines zulässigen Objektes so tief in das Schutzfeld, bis dessen vollständige Ausdehnung in Querrichtung erfasst werden kann, Rechnung getragen wird.

Vorzugsweise prüft das Lichtgitter die Anzahl an unterbrochenen Lichtstrahlen in einem regelmässigen Zeitabstand, solange das Objekt sich im Schutzfeld befindet, wobei der Zeitabstand 0.5 bis 30 ms beträgt. Die Prüfung mit einer bestimmten Abtastrate ermöglicht das Detektieren eines neuen Unterbruchs oder einer neuen Freigabe eines Lichtstrahls. Je kürzer diese Zeit gewählt wird, umso schneller kann das Eintreten eines unzulässigen Objekts detektiert werden. Deshalb ist dieser Zeitabstand möglichst klein gewählt, wobei ein Zeitabstand von bis zu 30 ms das schnelle Detektieren eines unzulässigen Objekts ermöglicht.

Der Toleranzbereich umfasst bevorzugt zwei Teilbereiche. Diese sind an gegenüberliegenden Seiten des zweiten Bereichs angeordnet. Der zweite Bereich reicht von einer Kante des Lichtgitters bis zur gegenüberliegenden Kante. Der zweite Bereich weist stets eine rechteckige Form auf. Nebst den zwei Seiten des zweiten Bereichs, welche durch die Kanten des Lichtgitters gebildet sind, bilden die anderen zwei Seiten den Rand des zweiten Bereichs und somit die Grenze zum Toleranzbereich. Im Gegensatz zu den Seiten, welche durch die Kanten des Lichtgitters gebildet sind, ist die Position der anderen zwei Seiten nicht durch die Dimension der Vorrichtung vorbestimmt, sondern wird durch das das Schutzfeld passierende Objekt bestimmt. Aus diesem Grund werden die zwei Seiten als freie Seiten des zweiten Bereichs bezeichnet. An diesen freien Seiten grenzt jeweils der Toleranzbereich an. Da der zweite Bereich zwei freie Seiten aufweisen kann, kann der Toleranzbereich in zwei Teilbereiche aufgeteilt sein. In der Regel ist vorgesehen, dass an jeder freien Seite des zweiten Bereichs ein Teilbereich des Toleranzbereichs angrenzt.

Der Toleranzbereich ist bevorzugt insgesamt aus bis zu zwölf Lichtstrahlen gebildet. Diese sechs Lichtstrahlen können sich auch auf zwei Teilbereiche aufteilen. Der Toleranzbereich sollte möglichst klein gehalten werden, damit die Zuverlässigkeit der Funktion des Lichtgitters noch gewährleistet ist. Deshalb kann die maximale Anzahl an Lichtstrahlen, welche den Toleranzbereich bilden, begrenzt sein.

Vorzugsweise bilden zwei Lichtgitter, welche in der gleichen Ebene liegen, je ein Schutzfeld. Der Einsatz von zwei Lichtgittern ermöglicht die Ausdehnung des Objekts in zwei unterschiedliche Richtungen zu prüfen. Wenn die Lichtgitter je ein Schutzfeld bilden, welche in der gleichen Ebene liegen, ist der Platz, den das Lichtgitter für die Prüfung von zwei Dimensionen braucht, minimal.

In einer weiter bevorzugten Ausführungsform liegen die Lichtstrahlen der beiden Lichtgitter senkrecht zueinander. Damit wäre es möglich zum Beispiel mit dem ersten Lichtgitter die Höhe des Objekts und mit dem zweiten Lichtgitter die Breite des gleichen Objekts zu prüfen. Die zueinander senkrechte Anordnung liefert die Information über die Breite als auch über die Höhe des Objekts, womit nebst der Länge die beiden wichtigsten Abmessungen des Objekts geprüft sind.

Es können zwei oder mehr Lichtgitter vorgesehen sein. Die Lichtgitter sind dabei vorzugsweise in Bewegungsrichtung des Objektes nacheinander angeordnet, sodass ein Objekt nach Passieren des ersten Lichtgitters durch das zweite Lichtgitter geführt wird. Die Lichtstrahlen können zwischen den beiden Lichtgittern unterschiedlich angeordnet sein. Idealerweise sind die Lichtgitter parallel zueinander angeordnet. Ein erstes Lichtgitter ermöglicht die Ausdehnung eines Objekts in eine Querrichtung zu messen, wogegen mit einem weiteren zweiten Lichtgitter die Ausdehnung des Objekts in eine andere Querrichtung gemessen werden kann. Das Anbringen eines zweiten Lichtgitters erhöht die Zuverlässigkeit des Verfahrens zur Detektion von unzulässigen Objekten.

Vorzugsweise weist die Anlage ein Förderband auf und diese ist derart zum Lichtgitter angeordnet, dass die Laufrichtung des Förderbandes senkrecht zur vom Lichtgitter aufgespannten Ebene gerichtet ist. Die senkrechte Anordnung eines Lichtgitters zur Laufrichtung des Förderbands bildet die einfachste Bauweise eines Lichtgitters an einer Anlage. Somit ist sowohl der Aufwand zur Herstellung des Lichtgitters als auch derjenige zum Aufbauen des Lichtgitters an der Anlage klein gehalten. Die einfache Konstruktion des Lichtgitters an der Anlage ist ein Vorteil, der sich aufgrund des erfindungsmässigen Verfahrens ergibt.

Gegenstand der vorliegenden Erfindung ist auch eine Sensoranordnung mit wenigstens einem Lichtgitter zur Überwachung eines Schutzfeldes mit zwei einander gegenüberliegend anordenbaren ersten und zweiten Leisten, die mit Sendern und Empfängern bestückt sind. Im Betrieb ist zwischen den Sendern und Empfängern der beiden Leisten ein Überwachungsfeld definiert. Eine vorzugsweise in den Leisten des Lichtgitters angeordnete Steuer- und Überwachungseinheit, die mit den ersten und zweiten Leisten in Verbindung steht, hat einen Speicher, in welchem ein Programm abgelegt ist, das dafür sorgt, dass bei Eingriff eines Objekts in das Schutzfeld ein Schaltsignal generiert wird, mittels dessen eine Sicherheitsfunktion auslösbar ist. Eine Funktion erlaubt es, die Überwachungsfunktion zumindest partiell zu überbrücken, was in der Fachsprache als «Muting» bezeichnet wird.

Die erwähnte Sensoranordnung ist weiter dadurch gekennzeichnet, dass das im Speicher abgelegte Programm, beim Eintritt eines Objekts in das Schutzfeld, das Schutzfeld in einen ersten, einen zweiten und einen Toleranz-Bereich unterteilt. Der zweite Bereich ist dabei durch alle bis auf die äussersten vom Objekt unterbrochenen Lichtstrahlen definiert. Die äussersten vom Objekt unterbrochenen Lichtstrahlen zusammen mit den benachbarten freien Lichtstrahlen bilden den Toleranzbereich, falls freie benachbarte Lichtstrahlen vorliegen. Die restlichen freien Lichtstrahlen bilden den ersten Bereich, wobei bei Unterbruch eines Lichtstrahls im ersten Bereich ein Abschaltsignal vom Lichtgitter erzeugt wird. Unterbrochene und freie Lichtstrahlen im Toleranzbereich werden ignoriert, und es wird kein Abschalt-Signal erzeugt. Die Steuer- und Überwachungseinheit prüft die Anzahl an unterbrochenen Lichtstrahlen im zweiten Bereich, solange das Objekt sich im Schutzfeld befindet und erzeugt nach Freigabe eines unterbrochenen Lichtstrahls im zweiten Bereich ein Abschaltsignal, falls nach einer ersten vordefinierten Zeitdauer nicht alle Lichtstrahlen im Schutzfeld frei sind. Diese Sensoranordnung hat den Vorteil, dass diese zuverlässig zwischen zulässigen und unzulässigen Objekten unterscheiden kann. Während zulässige Objekte das Schutzfeld ohne Weiteres passieren können, führen unzulässige Objekte zur Erzeugung eines Abschaltsignals und somit zum Stopp einer zu überwachenden Anlage. Ein Vorteil der Sensoranordnung ist, dass das Lichtgitter keine Information über die Dimension der zulässigen Objekte zu besitzen braucht.

Das beschriebene Lichtgitter umfasst vorzugsweise eine Senderleiste mit einer Mehrzahl von Sendern und eine Empfängerleiste mit einer Mehrzahl von Empfängern. Grundsätzlich können die Sender der Senderleiste unabhängig von der Empfängerleiste Lichtpulse aussenden. Das heisst, die Senderleiste muss mit der Empfängerleiste elektrisch nicht verbunden sein, aber optisch, d.h. die Synchronisation geschieht über optische Signale.

Denkbar ist jedoch auch, dass Sendeelemente und Empfangselemente sowohl in der ersten Leiste als auch in der zweiten Leiste vorgesehen sind. Auch hier müssen die Leisten elektrisch nicht miteinander verbunden sein, aber optisch, um die Synchronisation zu ermöglichen. Bei der gleichen Anordnung, d.h. Sendeelemente und Empfangselemente in der ersten Leiste wie auch in der zweiten Leiste, können die Leisten jedoch auch elektrisch verbunden sein, um die Synchronisation über elektrische Signale zu ermöglichen. Sodann gibt es noch die Variante, dass die Sender der Senderleiste unabhängig von der Empfängerleiste senden. In diesem Fall sind die Sender elektrisch mit den Empfängern verbunden (Synchronisation über elektrische Signale).

Gemäss einer bevorzugten Variante des Verfahrens wird beim Eintritt eines Objekts in das Schutzfeld nach Unterbruch eines Lichtstrahls und Ablauf einer vordefinierten zweiten Zeitdauer das Schutzfeld in den ersten, den zweiten und den Toleranz-Bereich unterteilt. Die dafür vordefinierte Zeitdauer ist unter anderem von der Geschwindigkeit des Objektes abhängig. Der Vorteil dieser Verfahrensvariante ist, dass einheitliche Bedingungen für alle Objekte herrschen, wodurch die Komplexität zur Erkennung eines zulässigen Objekts reduziert wird.

Vorteilhaft wird der Toleranzbereich durch eine gleiche Anzahl von freien wie unterbrochenen Lichtstrahlen gebildet.

Vorzugsweise prüft das Lichtgitter, solange ein Objekt sich im Schutzfeld befindet, die Anzahl an unterbrochenen Lichtstrahlen in einem regelmässigen Zeitabstand, wobei der Zeitabstand vorzugsweise zwischen 0.5 und 30 ms beträgt.

Zweckmässigerweise umfasst der Toleranzbereich zwei Teilbereiche, welche an gegenüberliegenden Seiten des zweiten Bereichs vorgesehen sind.

Weitere vorteilhafte Ausführungsformen der Sensoranordnung sind oben bei der Beschreibung des Verfahrens bereits diskutiert.

### KURZBESCHREIBUNG DER FIGUREN

Nachfolgend wird die Erfindung unter Bezugnahme auf die Figuren in schematischer Darstellung näher beschrieben. Genannte bevorzugte Merkmale können in beliebiger Kombination verwirklicht werden - soweit sie sich nicht gegenseitig ausschliessen. Es zeigen in nicht massstabsgetreuer, schematischer Darstellung:
- Figur 1:: ein Schnittbild durch ein Lichtgitter mit einem Objekt davor und der Unterteilung des Lichtgitters;
- Figur 2:: ein Schnittbild durch ein Lichtgitter mit einem Objekt am Rand des Lichtgitters und der jeweiligen Unterteilung des Lichtgitters;
- Figur 3:: eine Frontansicht auf ein Lichtgitter mit unterteiltem Schutzfeld;
- Figur 4:: eine Frontansicht auf ein Schutzfeld gebildet durch zwei Lichtgitter;
- Figur 5:: eine Darstellung des zeitlichen Verlaufs der Lichtstrahlen-Zustände bei Eintritt eines Objekts in das Lichtgitter.

### DETAILIERTE BESCHREIBUNG DER FIGUREN

Im Folgenden stehen gleiche Bezugsziffern für gleiche oder funktionsgleiche Elemente (in unterschiedlichen Figuren). Ein zusätzlicher Apostroph weist auf ein mehrfaches Vorhandensein des selben Elements in einer Figur und dient gegebenenfalls zur Unterscheidung der identischen Elemente.

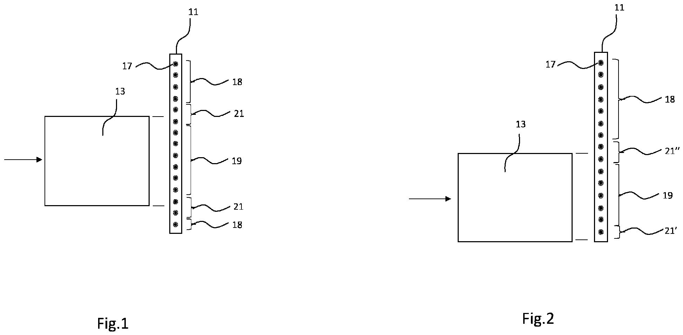

In Figur 1 ist eine Schnittdarstellung durch ein Lichtgitter 11 mit einem auf das Lichtgitter 11 sich bewegenden Objekt 13 gezeigt. Das Lichtgitter umfasst Sender und Empfänger 15 für die Lichtstrahlen 17, welche vertikal mit einem gleichmässigen Abstand untereinander angeordnet sind. Die Lichtstrahlen 17 bilden das Schutzfeld. Das Objekt 13 bewegt sich senkrecht zur Ebene des Schutzfelds. In Figur 1 sind die Lichtstrahlen 17 in unterschiedliche Bereiche unterteilt. Die Aufteilung der Lichtstrahlen 17, wie sie in Figur 1 gezeigt ist, dient lediglich zum Aufzeigen der diversen Bereiche. Denn die Unterteilung der Lichtstrahlen 17 tritt erst ein, wenn das Objekt 13 in das Schutzfeld eintritt. Die Grösse dieser Bereiche ist durch die Geometrie des Objekts 13 bestimmt. Der erste Bereich 18 wird in der Regel durch die freien Lichtstrahlen gebildet. Der zweite Bereich 19 dagegen umfasst jene Lichtstrahlen, welche durch das Objekt 13 unterbrochen werden, wenn das Objekt 13 sich im Schutzfeld befindet. Die äussersten Lichtstrahlen des zweiten Bereichs und deren benachbarte Lichtstrahlen, welche nicht im ersten Bereich liegen, bilden einen Toleranzbereich 21. Dieser umfasst im hier gezeigten Beispiel zweimal zwei Lichtstrahlen. Der erste Bereich 18 wird somit durch alle freien Lichtstrahlen gebildet, welche nicht dem Toleranzbereich 21 angehören. Ein Unterbruch eines Lichtstrahls im ersten Bereich 18 hat zur Folge, dass ein Abschaltsignal erzeugt wird, welches zum schnellstmöglichen Stopp der überwachten Anlage führt. Der Unterbruch und die Freigabe der Lichtstrahlen im Toleranzbereich 21 wird vom Lichtgitter 11 ignoriert, so dass die Lichtstrahlen im Toleranzbereich 21 keine Auswirkung auf das Erzeugen eines Abschaltsignals aufweisen.

In Figur 2 ist ein Beispiel gezeigt, in welchem der Schattenwurf des Objekts 13 auf das Lichtgitter 11 an dessen Rand zu liegen kommt. Die Unterteilung des Lichtgitters 11 in die drei Bereiche ist wie bereits in Figur 1 aufgezeigt. Im Gegensatz zum Beispiel aus Figur 1 ist der Toleranzbereich 21 auf beiden Seiten des zweiten Bereichs in Figur 2 nicht gleich gross. Der Toleranzbereich 21' am Rand des Lichtgitters 11 umfasst in der dargestellten Ausführung lediglich einen Lichtstrahl. Dieser Lichtstrahl ist der äusserste Lichtstrahl, welcher vom Schattenwurf des Objekts 13 abgedeckt wird. Der Toleranzbereich 21" auf der anderen Seite des zulässigen Bereichs umfasst wie in der Ausführung aus Figur 1 zwei Lichtstrahlen.

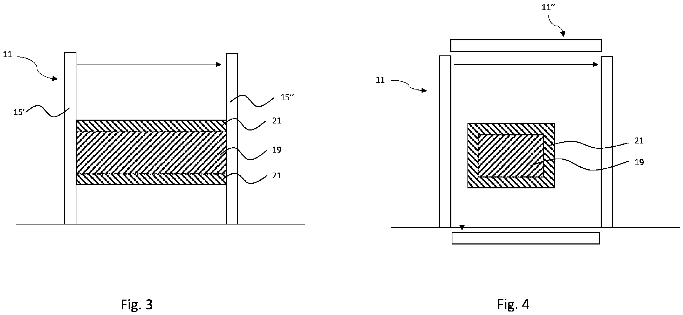

In Figur 3 ist eine Frontsicht auf ein Lichtgitter 11 gezeigt, welches erfindungsgemäss temporär in unterschiedliche Bereiche unterteilt ist. Zur Vereinfachung der Darstellung ist das Objekt im Schutzfeld nicht gezeigt. Der zweite Bereich 19 weist einen Toleranzbereich 21 auf, welche in Form von zwei Streifen am oberen und am unteren Rand des zweiten Bereichs 19 erzeugt sind. Da der zweite Bereich 19 durch Unterbruch von Lichtstrahlen zustande kommt, zieht sich der zweite Bereich 19 infolge dessen von der Sendevorrichtung 15' bis zur Empfangsvorrichtung 15" über den ganzen Arbeitsabstand des Lichtgitters 11 hin.

Um eine Einschränkung des zweiten Bereichs 19 in der Breite vorzunehmen, kann ein zweites Lichtgitter 11" angeordnet werden. Idealerweise ist das zweite Lichtgitter 11" derart angeordnet, dass die Lichtstrahlen 17' des ersten Lichtgitters 11' senkrecht zu denjenigen des zweiten Lichtgitters 11" stehen. Eine Ausführung mit solchen zwei Lichtgittern 11 ist in Figur 4 gezeigt. Der zweite Bereich 19 ist definiert durch die vom Objekt unterbrochenen Lichtstrahlen 17 beider Lichtgitter 11, 11'. Somit ergibt sich eine Einschränkung des zweiten Bereichs 19 sowohl in der Höhe als auch in der Breite des Lichtgitters. Bei Verwendung eines Toleranzbereichs 21 ist dieser in der Frontsicht als ein Rahmen um den zweiten Bereich gebildet. Die Objekte sind üblicherweise vorgesehen auf einem Förderband getragen zu werden. Bei einer Anordnung der Lichtgitter 11, 11" wie in Figur 4 ist es möglich, dass ein unterhalb des Objekts angeordnetes Förderband eine grosse Anzahl an Lichtstrahlen unterbricht und somit die Prüfung der Breite des Objekts nicht zulässt. Dem kann entgegengewirkt werden, wenn das Förderband in zwei nacheinander angeordnete Förderbänder unterteilt ist. Dabei bildet das Lichtgitter den Übergang von einem Förderband zum nächsten, womit beim Lichtgitter kein Förderband anwesend ist und die Lichtstrahlen entsprechend nicht durch das Förderband unterbrochen werden können.

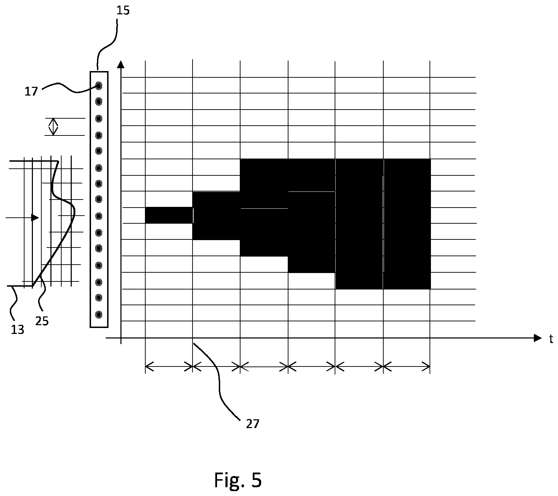

Figur 5 zeigt den zeitlichen Ablauf der Zustände der Lichtstrahlen 17, während ein Objekt 13 in das Schutzfeld eintritt. Das Objekt 13 weist eine vordere Kante 25 auf, zu der Schutzfeldebene eine Parallelitätsungenauigkeit aufweist. Unter anderem muss deshalb eine bestimmte vordefinierte Zeit abgewartet werden, bis die Lichtstrahlen in Bereiche unterteilt werden. Die vertikalen Linien im Diagramm zeigen die Abtastungen 27 des Lichtgitters, welche die Prüfung der Zustände der Lichtstrahlen in einem regelmässigen Zeitabstand darstellen. Das Objekt 13 ist nach der fünften Abtastung 27 des Lichtgitters soweit in das Schutzfeld eingedrungen, dass sowohl die Anzahl als auch die Position der unterbrochenen Lichtstrahlen konstant bleibt. Das Lichtgitter unterteilt die Lichtstrahlen nach einer vordefinierten Zeitdauer in die oben erwähnten drei Bereiche. Die unterbrochenen Lichtstrahlen bilden bis auf die zwei äussersten Lichtstrahlen den zweiten Bereich 19. Die äussersten unterbrochenen Lichtstrahlen bilden mit den benachbarten freien Lichtstrahlen einen Toleranzbereich 21, wogegen die restlichen Lichtstrahlen den ersten Bereich 18 bilden. Die Zeit, bis zu welcher die vollständige Abtastung 27 des Objektes durch das Lichtgitter abgeschlossen ist, muss gleich oder kürzer als die vordefinierte Zeitdauer sein. Mit dem Abwarten der vordefinierten Zeitdauer bis zur Unterteilung des Schutzfelds nach Unterbruch des ersten Lichtstrahls ergibt sich eine Toleranz gegenüber der Form der Vorderseite des Objekts. Die Kanten der Vorderseite können Bogen aufweisen und müssen nicht zwingend parallel zum Lichtgitter verlaufen. Aus dem zeitlichen Verlauf der unterbrochen Lichtstrahlen aus Figur 5 geht hervor, dass das Objekt jedoch derart gegenüber dem Lichtgitter angeordnet werden muss, dass die von der Vorderseite des Objektes wegführenden Kanten senkrecht zum Lichtgitter gerichtet sein müssen. Der Toleranzbereich erlaubt eine gewisse Krümmung dieser Kanten, jedoch darf sich die Ausdehnung quer zur Bewegungsrichtung des Objekts nicht derart stark variieren, dass die Lichtstrahlen ausserhalb des Toleranzbereich davon beeinflusst werden.

Deshalb eignet sich das erfindungsgemässe Verfahren vor allem für Objekte, welche einen konstanten Querschnittsverlauf aufweisen.

Während die Erfindung vorstehend unter Bezugnahme auf spezifische Ausführungsformen beschrieben wurde, ist es offensichtlich, dass Änderungen, Modifikationen, Variationen und Kombinationen ohne vom Erfindungsgedanken abzuweichen gemacht werden können.

### BEZUGSZEICHENLISTE:

- 11: Lichtgitter
- 13: Objekt
- 15: Sender/Empfänger
- 17: Lichtstrahlen
- 18: Erster Bereich
- 19: Zweiter Bereich
- 21: Toleranzbereich
- 25: Vordere Kante des Objekts
- 27: Abtastung

## Patentansprüche

1. Verfahren zur Überwachung eines Schutzfelds an einer Anlage, wobei
- das Schutzfeld durch ein Lichtgitter (11) gebildet ist, und das Lichtgitter (11) durch eine Mehrzahl von Lichtstrahlen (17) zustande kommt, die in einer Ebene liegen und von einer Sendevorrichtung (15') an die gegenüberliegend angeordnete Empfangsvorrichtung (15") gesendet werden,
- das Lichtgitter (11) eine Steuereinheit zur Aufnahme und Bearbeitung von Signalen der Sende- und/oder Empfangsvorrichtung aufweist,
**dadurch gekennzeichnet, dass**
- beim Eintritt eines Objekts (13) in das Schutzfeld, das Schutzfeld in einen ersten (18), einen zweiten (19) und einen Toleranz-Bereich (21) unterteilt ist,
wobei der zweite Bereich (19) durch alle bis auf die äussersten vom Objekt unterbrochenen Lichtstrahlen (17) definiert ist,
- die äussersten vom Objekt unterbrochenen Lichtstrahlen zusammen mit den benachbarten freien Lichtstrahlen den Toleranzbereich (21) bilden, falls freie benachbarte Lichtstrahlen vorliegen, und
- die restlichen freien Lichtstrahlen den ersten Bereich (18) bilden, wobei
- bei Unterbruch eines Lichtstrahls (17) im ersten Bereich (18) ein Abschaltsignal vom Lichtgitter (11) erzeugt wird,
- unterbrochene und freie Lichtstrahlen im Toleranzbereich (21) ignoriert werden und kein Abschalt-Signal erzeugt wird,
- das Lichtgitter (11) die Anzahl an unterbrochenen Lichtstrahlen im zweiten Bereich prüft, solange das Objekt (13) sich im Schutzfeld befindet und
nach Freigabe eines unterbrochenen Lichtstrahls im zweiten Bereich (19) ein Abschaltsignal erzeugt wird, falls nach einer vordefinierten ersten Zeitdauer nicht alle Lichtstrahlen im Schutzfeld frei sind.

2. Verfahren nach Anspruch 1, **dadurch gekennzeichnet, dass** beim Eintritt eines Objekts (13) in das Schutzfeld nach Unterbruch eines Lichtstrahls (17) und Ablauf einer vordefinierten zweiten Zeitdauer das Schutzfeld in den ersten (18), den zweiten (19) und den Toleranz-Bereich (21) unterteilt wird.

3. Verfahren nach Anspruch 1 oder 2, **dadurch gekennzeichnet, dass** die Mindestgrösse des zweiten Bereichs (19) durch mindestens drei unterbrochene Lichtstrahlen (17) definiert ist.

4. Verfahren nach einem der Ansprüche 1 bis 3, **dadurch gekennzeichnet, dass** der Toleranzbereich (21) durch eine gleiche Anzahl von freien wie unterbrochenen Lichtstrahlen gebildet ist.

5. Verfahren nach einem der Ansprüche 1 bis 4, **dadurch gekennzeichnet, dass** die erste und die zweite Zeitdauer je eine Länge von maximal 4 Sekunden, vorzugsweise maximal 2 Sekunden und mindestens 5 ms, vorzugsweise mindestens 25 ms, aufweisen.

6. Verfahren nach einem der Ansprüche 1 bis 5, **dadurch gekennzeichnet, dass**, solange ein Objekt (13) sich im Schutzfeld befindet, das Lichtgitter (11) die Anzahl an unterbrochenen Lichtstrahlen (17) in einem regelmässigen Zeitabstand prüft, wobei der Zeitabstand vorzugsweise 0.5 bis 30 ms beträgt.

7. Verfahren nach einem der Ansprüche 1 bis 6, **dadurch gekennzeichnet, dass** der Toleranzbereich (21) zwei Teilbereiche umfasst und diese an gegenüberliegenden Seiten des zweiten Bereichs (19) angeordnet sind.

8. Verfahren nach einem der Ansprüche 1 bis 7, **dadurch gekennzeichnet, dass** zwei Lichtgitter (11) verwendet werden, deren Schutzfelder in einer Ebene liegen, wobei die Lichtstrahlen (17) der beiden Lichtgitter (11) vorzugsweise senkrecht zueinander liegen.

9. Verfahren nach einem der Ansprüche 1 bis 8, dass die Anlage ein Förderband aufweist und dieses derart zum Lichtgitter (11) angeordnet ist, dass die Laufrichtung des Förderbandes im Wesentlichen senkrecht zur vom Lichtgitter (11) aufgespannten Ebene gerichtet ist.

10. Sensoranordnung (1) mit wenigstens einem Lichtgitter (8) zur Überwachung eines Schutzfeldes mit
- zwei einander gegenüberliegend anordenbaren ersten und zweiten Leisten, die mit Sendern und Empfängern bestückt sind, sodass im Betrieb zwischen den Sendern und Empfängern der beiden Leisten ein Überwachungsfeld definiert ist, und
- einer Steuer- und Überwachungseinheit, die mit den ersten und zweiten Leisten in Verbindung steht und in einem Speicher ein Programm gespeichert hat, das dafür sorgt, dass bei Eingriff eines Objekts in das Schutzfeld ein Schaltsignal generiert wird, mittels dessen eine Sicherheitsfunktion auslösbar ist, und wobei eine Mutingfunktion vorgesehen ist, mittels derer die Überwachungsfunktion zumindest partiell überbrückbar ist,
**dadurch gekennzeichnet, dass**
das Programm - beim Eintritt eines Objekts (13) in das Schutzfeld, das Schutzfeld in einen ersten (18), einen zweiten (19) und einen Toleranz-Bereich (21) unterteilt, wobei der zweite Bereich (19) durch alle bis auf die äussersten vom Objekt unterbrochenen Lichtstrahlen (17) definiert ist,
- die äussersten vom Objekt unterbrochenen Lichtstrahlen zusammen mit den benachbarten freien Lichtstrahlen den Toleranzbereich (21) bilden, falls freie benachbarte Lichtstrahlen vorliegen, und
- die restlichen freien Lichtstrahlen den ersten Bereich (18) bilden, wobei bei Unterbruch eines Lichtstrahls (17) im ersten Bereich (18) ein Abschaltsignal vom Lichtgitter (11) erzeugt wird,
- unterbrochene und freie Lichtstrahlen im Toleranzbereich (21) ignoriert werden und kein Abschalt-Signal erzeugt wird,
- das Lichtgitter (11) die Anzahl an unterbrochenen Lichtstrahlen im zweiten Bereich prüft, solange das Objekt (13) sich im Schutzfeld befindet und
nach Freigabe eines unterbrochenen Lichtstrahls im zweiten Bereich (19) ein Abschaltsignal erzeugt wird, falls nach einer ersten vordefinierten Zeitdauer nicht alle Lichtstrahlen im Schutzfeld frei sind.

11. Sensoranordnung (1) nach Anspruch 10, **dadurch gekennzeichnet, dass** beim Eintritt eines Objekts (13) in das Schutzfeld nach Unterbruch eines Lichtstrahls (17) und Ablauf einer vordefinierten zweiten Zeitdauer das Schutzfeld in den ersten (18), den zweiten (19) und den Toleranz-Bereich (21) unterteilt wird.

12. Sensoranordnung (1) nach Anspruch 10 oder 11, **dadurch gekennzeichnet, dass** die Mindestgrösse des zweiten Bereichs (19) durch mindestens drei unterbrochene Lichtstrahlen (17) definiert ist.

13. Sensoranordnung (1) nach einem der Ansprüche 10 bis 12, **dadurch gekennzeichnet, dass** der Toleranzbereich (21) durch eine gleiche Anzahl von freien wie unterbrochenen Lichtstrahlen gebildet ist.

14. Sensoranordnung (1) nach einem der Ansprüche 10 bis 13, **dadurch gekennzeichnet, dass** solange ein Objekt (13) sich im Schutzfeld befindet, das Lichtgitter (11) die Anzahl an unterbrochenen Lichtstrahlen (17) in einem regelmässigen Zeitabstand prüft, wobei der Zeitabstand 0.5 bis 30 ms beträgt.

15. Sensoranordnung (1) nach einem der Ansprüche 10 bis 14, **dadurch gekennzeichnet, dass** der Toleranzbereich (21) zwei Teilbereiche umfasst und diese an gegenüberliegenden Seiten des zweiten Bereichs (19) vorgesehen sind.
